# EUROPEAN PATENT APPLICATION

(11) **EP 4 064 625 A1**
(43) Date of publication of application: **28.09.2022**
(21) Application number: 20889154.9
(22) Date of filing: 13.11.2020
(51) Int. Cl.: H04L 12/741, H04L 29/12

(54) **MESSAGE FORWARDING METHOD AND APPARATUS, AND DISTRIBUTED DEVICE**

(30) Priority: 19.11.2019 CN 201911134647
(71) Applicant: ZTE Corporation, Shenzhen, Guangdong 518057 (CN)
(72) Inventor: ZENG, Lingmeng, Shenzhen, Guangdong 518057 (CN)
(74) Representative: Petraz, Gilberto Luigi
(86) International application number: PCT/CN2020/128685
(87) International publication number: WO 2021/098602

(57) **Abstract**

The present invention provides a message forwarding method and apparatus, and a distributed device. The message forwarding method is applicable to the distributed device. The distributed device comprises more than one board card. The method comprises: determining a board card from the more than one board card as a high-performance board card, wherein the capacity of an address resolution protocol (ARP) of the high-performance board card is the largest; and when an incoming board card is not a high-performance board card and a corresponding ARP entry cannot be queried on the incoming board card, forwarding a message by means of the high-performance board card, wherein a directly connected network segment routing exit of the incoming board card is set as a virtual forwarding unit mod, and the virtual forwarding unit mod is used for designating the high-performance board card to forward a message.

## Description

The present disclosure claims the priority of the Chinese patent application No. CN201911134647.2 filed on November 19, 2019 and entitled "packet forwarding method and apparatus and distributed device", the entirety of which is incorporated herein by reference.

### Field of the Invention

The present disclosure relates to the field of data network communication, in particular to a packet forwarding method and apparatus, and a distributed device.

### Background of the Invention

The present disclosure relates to a packet forwarding method of a distributed device, which may specifically include a distributed switch and a distributed router. As for an address resolution protocol of a distributed network device in the related art, referred to as ARP, forwarding is completed by means of an ingress board, and host routing table entries of the ingress board are searched. In some cases, the forwarding process is as follows.
1. After a packet reaches the ingress board, the ARP on the board is queried firstly. If it can be queried, correct egress information can be obtained; and if it cannot be queried, a corresponding directly-connected segment route can be queried by means of the massage, a CPU serving as an egress, and the packet being subjected to soft forwarding.
2. According to the queried egress information, a chip forwarding egress modport table is queried to find a path of an egress port.

In the above related art, since the ingress board (in the disclosure, the board into which a data flow flows is referred to as the ingress board) determines the maximum total number of ARP entries that one distributed device can forward, even if the device is configured with other high-performance boards, these high-performance boards are still not fully utilized.

### Summary of the Invention

The present disclosure provides a packet forwarding method and apparatus and a distributed device.

According to one aspect of the disclosure, provided is a packet forwarding method, applicable to a distributed device. The distributed device includes more than one board. The method includes: determining one of the more than one board as a high-performance board with a maximum address resolution protocol (ARP) capacity; and when an ingress board is not the high-performance board and a corresponding ARP table entry cannot be queried on the ingress board, forwarding a packet by means of the high-performance board. A directly-connected segment route egress of the ingress board is arranged as a virtual forwarding unit MOD which is configured to specify the high-performance board to forward the packet.

According to another aspect of the disclosure, provided is a packet forwarding apparatus, applicable to the distributed device. The distributed device includes more than one board. A method includes: a determination module, configured to determine one of the more than one board as a high-performance board with a maximum ARP capacity; and a forwarding module, configured to forward a packet by means of the high-performance board when an ingress board is not the high-performance board and a corresponding ARP table entry cannot be queried on the ingress board. A directly-connected segment route egress of the ingress board is arranged as a virtual forwarding unit MOD which is configured to specify the high-performance board to forward the packet.

According to another aspect of the disclosure, provided is a distributed device. The distributed device includes a high-performance board and at least one common board. The distributed device includes the common board, configured to receive a packet when serving as an ingress board; and the high-performance board, configured to forward the packet when a corresponding ARP table entry cannot be queried on the common board. The high-performance board has a maximum ARP capacity, a directly-connected segment route egress of the common board being arranged as a virtual forwarding unit MOD which is configured to specify the high-performance board to forward the packet.

### Brief Description of the Drawings

The accompanying drawings described herein are used to provide further understanding of the disclosure and constitute a part of the disclosure. The exemplary embodiments of the disclosure and their descriptions are used to explain the disclosure and do not constitute an improper limitation on the disclosure. In the accompanying drawings,
Fig. 1 is a flow chart of a packet forwarding method according to an embodiment of the disclosure;
Fig. 2 is a flow chart of a packet forwarding method according to a first specific embodiment of the disclosure;
Fig. 3 is a flow chart of a packet forwarding method according to a second specific embodiment of the disclosure;
Fig. 4 is a structural block diagram of a packet forwarding apparatus according to an embodiment of the disclosure;
Fig. 5 is a structural block diagram of a distributed device according to an embodiment of the disclosure.

### Detailed Description of the Embodiments

The present disclosure will be illustrated in detail hereinafter with reference to the accompanying drawings and in combination with the embodiments. It should be noted that the embodiments in the disclosure and the features in the embodiments can be combined with one another as long as there is no conflict.

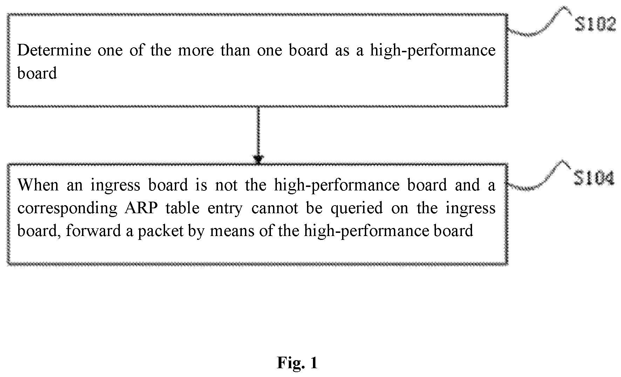

In this embodiment, a packet forwarding method is provided. Fig. 1 is a flow chart of a packet forwarding method according to an embodiment of the disclosure, which is applicable to a distributed device including more than one board, as shown in Fig. 1.

At step S102, one of the more than one board is determined as a high-performance board. The high-performance board has a maximum ARP capacity; and during route synchronization, hardware APR table entries need to be written into each of the boards as many as possible, and therefore, more ARP entries can be written into the high-performance board than into non-high-performance boards.

At step S104, when an ingress board is not the high-performance board and a corresponding ARP table entry cannot be queried on the ingress board, a packet is forwarded by means of the high-performance board. A directly-connected segment route egress of the ingress board is arranged as a virtual forwarding unit MOD which is configured to specify the high-performance board to forward the packet.

In one implementation, the distributed device includes the high-performance board and at least two common boards. A first common board serves as the ingress board. Forwarding the packet by means of the high-performance board includes: querying the corresponding ARP table entry on the high-performance board and conducting forwarding according to a query result. The query result includes direct forwarding by means of an egress in the high-performance board and forwarding it to a corresponding second common board.

In one implementation, before forwarding the packet by means of the high-performance board, the virtual forwarding unit MOD is written into each of the boards and a chip forwarding egress modport table of the main control board.

In one implementation, after writing the virtual forwarding unit MOD into each of the boards and the chip forwarding egress modport table of the main control board and before forwarding the packet by means of the high-performance board, the modport table is queried to obtain an egress port corresponding to the virtual forwarding unit MOD; and the packet is forwarded to the high-performance board by means of the egress port.

In a first optional embodiment, when the ingress board is not the high-performance board and the corresponding ARP table entry is queried on the ingress board, the packet is forwarded according to queried egress information.

By means of the above optional embodiment, the high-performance board with the specified configuration can be searched for the second time, so that a data packet received from an internal interconnection port can be correctly subjected to lookup forwarding on the high-performance board, while as for other boards, data packets received from the internal interconnection port are still forwarded according to the original process.

In a second optional embodiment, when the ingress board is the high-performance board and the corresponding ARP table entry is queried on the high-performance board, the packet is forwarded according to the queried egress information; and when the ingress board is the high-performance board and the corresponding ARP table entry is not queried on the high-performance board, the packet is forwarded to a CPU or discarded.

It is worth mentioning that when the high-performance board is changed, a corresponding relation between the virtual forwarding unit MOD and the high-performance board is modified. Compared with the related art, this embodiment also has the following technical advantages that when the configuration of the high-performance board needs to be changed, it is not necessary to modify the next-hop egress of the directly-connected route again, so that the packet discarding time of the device can be minimized.

The embodiment of the disclosure provides a packet forwarding method on the basis of specifying a certain board on the distributed device as the high-performance board and arbitrarily specifying other low-performance boards as the common boards. By introducing the virtual forwarding unit MOD, packets where ARP cannot be searched are forwarded to the high-performance board for secondary search of ARP, so as to increase the ARP forwarding capacity of the whole machine without affecting normal forwarding of the packets and greatly shorten the packet discarding time.

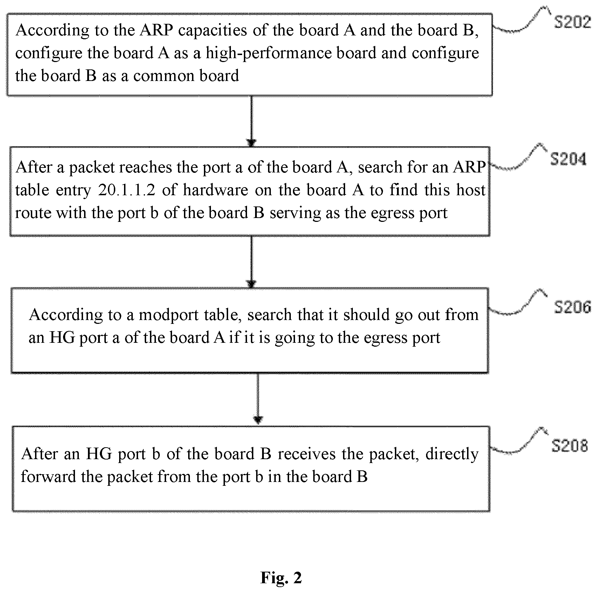

Fig. 2 is a flow chart of a packet forwarding method according to a first specific embodiment of the disclosure, which is applicable to a distributed device including a board A and a board B. The board A can support an ARP capacity of 64 K, and the board B can support an ARP capacity of 16 K. At a port a of the board A of the distributed device, a packet with a destination IP of 20.1.1.2 is received, and the ARP of 20.1.1.2 exists on both boards A and B. A port b of the board B serves as an egress port. As shown in Fig. 2, the method includes the following steps.

At step S202, according to the ARP capacities of the board A and the board B, the board A is configured as a high-performance board, and the board B is configured as a common board.

At step S204, after a packet reaches the port a of the board A, an ARP table entry 20.1.1.2 of hardware is searched on the board A to find this host route with the port b of the board B serving as the egress port.

At step S206, it is searched according to a modport table that it should go out from an HG port a of the board A if it is going to the egress port.

At step S208, after an HG port b of the board B receives the packet, the packet is directly forwarded from the port b in the board B.

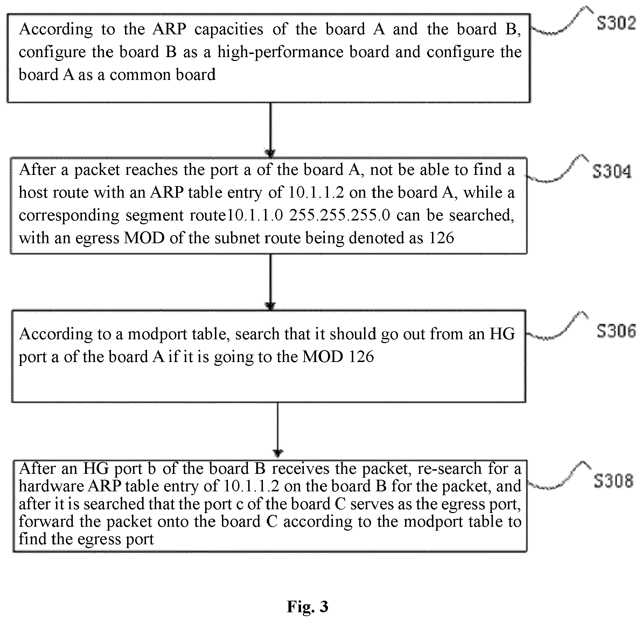

Fig. 3 is a flow chart of a packet forwarding method according to a first specific embodiment of the disclosure, which is applicable to a distributed device. The distributed device includes a board A and a board B. The board A can support an ARP capacity of 16K, and the board B can support an ARP capacity of 64K. At a port a of the board A, a packet with a destination IP of 10.1.1.2 is received, and the ARP of 10.1.1.2 is written on the board B into hardware. A port c of a board C serves as an egress port; and the board A fails to successfully write the ARP of 10.1.1.2 due to the performance limitation of full resources. As shown in Fig. 3, the method includes the following steps.

At step S302, according to the ARP capacities of the board A and the board B, the board B is configured as a high-performance board, and the board A is configured as a common board.

At step S304, after a packet reaches the port a of the board A, a host route with an ARP table entry of 10.1.1.2 cannot be found on the board A, while a corresponding segment route10. 1.1.0 255.255.255.0 can be searched, with an egress MOD of the subnet route being denoted as 126.

At step S306, it is searched according to a modport table that it should go out from an HG port a of the board A if it is going to the MOD 126.

At step S308, after an HG port b of the board B receives the packet, a hardware ARP table entry of 10.1.1.2 will be re-searched on the board B for the packet, and after it is searched that the port c of the board C serves as the egress port, the packet is forwarded onto the board C according to the modport table to find the egress port.

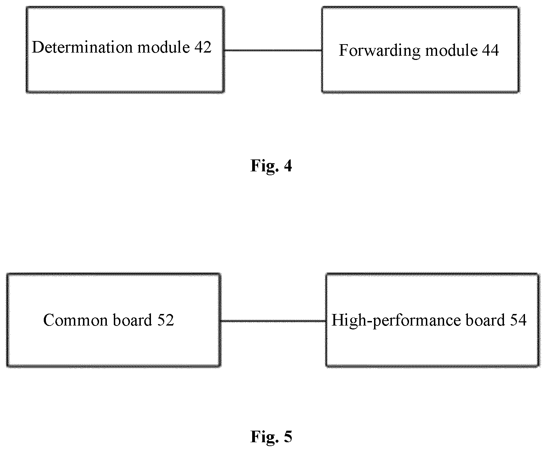

Fig. 4 is a structural block diagram of a packet forwarding apparatus according to an embodiment of the disclosure, which is applicable to a distributed device. The distributed device includes more than one board, and as shown in Fig. 4, includes the following modules.

A determination module 42 is configured to determine one of the more than one board as a high-performance board with a maximum ARP capacity.

A forwarding module 44 is configured to forward a packet by means of the high-performance board when an ingress board is not the high-performance board and a corresponding ARP table entry cannot be queried on the ingress board. A directly-connected segment route egress of the ingress board is arranged as a virtual forwarding unit MOD which is configured to specify the high-performance board to forward the packet.

Fig. 5 is a structural block diagram of a distributed device according to an embodiment of the disclosure. The distributed device includes at least one high-performance board and at least one common board, and as shown in Fig. 5, includes the following boards.

The common board 52 is configured to receive the packet when serving as an ingress board.

The high-performance board 54 is configured to forward the packet when a corresponding ARP table entry cannot be queried on the common board. The high-performance board has a maximum ARP capacity, a directly-connected segment route egress of the common board being arranged as a virtual forwarding unit MOD which is configured to specify the high-performance board to forward the packet.

The disclosure provides a solution and implementation of packet forwarding, including determining one of the more than one board as a high-performance board; and when an ingress board is not the high-performance board and a corresponding ARP table entry cannot be queried on the ingress board, forwarding a packet by means of the high-performance board. The problem in the related art that the ARP packet forwarding performance of a distributed device is limited by an ingress board is solved. The ARP forwarding capacity of the whole machine is increased without affecting normal forwarding of the packets.

Obviously, those skilled in the art should understand that the above modules or steps of the present disclosure may be implemented by a general-purpose computing device, and they may be centralized on a single computing device or distributed in a network composed of multiple computing devices. In one implementation, they may be implemented in program code executable by the computing device, such that they may be stored in a storage device for execution by the computing device. And in some cases, the steps shown or described may be performed in the sequence different from here, either by fabricating them separately into individual integrated circuit modules, or by fabricating multiple modules or steps of them into a single integrated circuit module. In this way, the disclosure is not limited to any particular combination of hardware and software.

The above are only preferred embodiments of the disclosure, and are not intended to limit the disclosure. For those skilled in the art, the disclosure may have various modifications and changes. Any modification, equivalent replacement, improvement, etc. made within the spirit and principle of the disclosure should be included within the protection scope of the disclosure.

## Claims

1. A packet forwarding method, applicable to a distributed device comprising more than one board, wherein the method comprises:
determining one of the more than one board as a high-performance board with a maximum address resolution protocol capacity, called a maximum ARP capacity; and
forwarding, when an ingress board is not the high-performance board and a corresponding ARP table entry cannot be queried on the ingress board, a packet by means of the high-performance board, wherein a directly-connected segment route egress of the ingress board is arranged as a virtual forwarding unit MOD, which is configured to specify the high-performance board to forward the packet.

2. The method according to claim 1, further comprising:
forwarding, when the ingress board is not the high-performance board and the corresponding ARP table entry is queried on the ingress board, the packet according to queried egress information.

3. The method according to claim 1, wherein the distributed device comprises the high-performance board and at least two common boards, wherein a first common board serves as the ingress board, and forwarding the packet by means of the high-performance board comprises:
querying the corresponding ARP table entry on the high-performance board and conducting forwarding according to a query result, wherein the query result comprises direct forwarding by means of an egress in the high-performance board and forwarding it to a corresponding second common board.

4. The method according to claim 1, wherein the distributed device further comprises a main control board, and wherein before forwarding the packet by means of the high-performance board, the method further comprising:
writing the virtual forwarding unit MOD into each of the boards and a chip forwarding egress modport table of the main control board.

5. The method according to claim 4, wherein before forwarding the packet by means of the high-performance board, the method further comprises:
querying the modport table to obtain an egress port corresponding to the virtual forwarding unit MOD; and
forwarding the packet to the high-performance board by means of the egress port.

6. The method according to claim 1, further comprising:
forwarding, when the ingress board is the high-performance board and the corresponding ARP table entry is queried on the high-performance board, the packet according to the queried egress information; or
forwarding, when the ingress board is the high-performance board and the corresponding ARP table entry is not queried on the high-performance board, the packet to a CPU or discarding the packet.

7. The method according to claim 1, comprising:
modifying, when the high-performance board is changed, a corresponding relation between the virtual forwarding unit MOD and the high-performance board.

8. A packet forwarding apparatus, applicable to a distributed device comprising more than one board, wherein the apparatus comprises:
a determination module, configured to determine one of the more than one board as a high-performance board with a maximum ARP capacity; and
a forwarding module, configured to forward a packet by means of the high-performance board when an ingress board is not the high-performance board and a corresponding ARP table entry cannot be queried on the ingress board, wherein a directly-connected segment route egress of the ingress board is arranged as a virtual forwarding unit mod which is configured to specify the high-performance board to forward the packet.

9. A distributed device, comprising a high-performance board and at least one common board, wherein the distributed device comprises:
the common board, configured to receive a packet when serving as an ingress board; and
the high-performance board, configured to forward the packet when a corresponding ARP table entry cannot be queried on the common board, wherein the high-performance board has a maximum ARP capacity, a directly-connected segment route egress of the common board being arranged as a virtual forwarding unit MOD which is configured to specify the high-performance board to forward the packet.
